# EUROPEAN PATENT SPECIFICATION

(11) **EP 4 054 037 B1**
(45) Date of publication and mention of the grant of the patent: **01.04.2026**
(21) Application number: 19950646.0
(22) Date of filing: 28.10.2019
(51) Int. Cl.: H02H 3/087, H01H 33/59, H01H 9/54, H01H 9/16, H01H 23/02

(54) **DC CIRCUIT BREAKER**
GLEICHSTROMSCHUTZSCHALTER
DISJONCTEUR À CC

(43) Date of publication of application: 07.09.2022
(73) Proprietor: MITSUBISHI ELECTRIC CORPORATION, Chiyoda-ku Tokyo 100-8310 (JP)
(72) Inventor: TAHATA, Kazuyori, Tokyo 100-8310 (JP); TOKOYODA, Sho, Tokyo 100-8310 (JP); INAGAKI, Takashi, Tokyo 100-8310 (JP)
(74) Representative: Witte, Weller & Partner Patentanwälte mbB
(86) International application number: PCT/JP2019/042213
(87) International publication number: WO 2021/084585

(56) References cited:
- EP-A1- 0 660 352
- EP-A1- 0 660 352
- WO-A1-2015/166600
- WO-A1-2015/166600
- WO-A1-2015/185096
- WO-A1-2015/185096
- DE-A1- 102011 079 723
- DE-A1- 102011 079 723
- JP-A- H08 148 066
- JP-A- H08 148 066
- JP-A- S60 157 121
- JP-A- S60 157 121
- JP-A- S60 189 130
- JP-U- S 619 745
- JP-U- S 619 745
- US-A- 4 216 513
- US-A- 4 216 513

## Description

### Field

The present invention relates to a direct-current circuit breaker for interrupting a direct current flowing through a direct-current line.

### Background

The direct-current circuit breaker creates a current zero point by superimposing a resonant current on a direct current, and interrupts the direct current at the current zero point. A known direct-current circuit breaker includes an interrupter on a direct-current line, and a capacitor and a reactor connected in parallel with the interrupter. The capacitor and the reactor constitute a resonant circuit. One interruption method of such a direct-current circuit breaker is a forced extinction method of charging the capacitor in advance, and superimposing a resonant current generated by discharging the capacitor on a direct current to cause arc extinction of the interrupter.

Patent Literature 1 discloses a direct-current circuit breaker that interrupts a direct current by the forced extinction method. For interrupting a direct current by the direct-current circuit breaker employing the forced extinction method disclosed in Patent Literature 1, an opening command is given to the interrupter and a high-speed switch of a resonant circuit is closed, so that the capacitor is discharged. The direct-current circuit breaker employing the forced extinction method can quickly create a current zero point by closing the high-speed switch, and is therefore suitable for fast interruption of a fault current flowing in a case of a fault such as a ground fault or short circuit.

### Citation List

### Patent Literature

Patent Literature 1: Japanese Patent Application Laid-open No. H08-148066. WO-A-2015185096 discloses a prior art DC circuit breaker.

### Summary

### Technical Problem

There have been demands for a direct-current circuit breaker being capable of interrupting a fault current, and additionally, in a steady state in which a direct current flows to a load connected on a direct-current line, capable of interrupting a load current, which is the direct current flowing toward the load. In a case where interruption of a fault current and interruption of a load current can be performed by one direct-current circuit breaker, interruption of a fault current and interruption of a load current can be performed with a simpler configuration than in a case where a direct-current circuit breaker for interrupting a load current is provided in addition to a direct-current circuit breaker for interrupting a fault current.

In a case of high-voltage direct current (HVDC) power transmission, while a fault current is a high current of about 10 to 20 kA, a load current is about 1 to 2 kA. When a direct-current circuit breaker designed to be capable of interrupting a fault current by the technology of Patent Literature 1 interrupts a load current by the forced extinction method in a manner similar to interruption of a fault current, much electric charge remains in the capacitor at a current zero point. Because the voltage remaining in the capacitor when the load current is interrupted is also applied to between the poles of the interrupter, the interrupter needs to make the operating duty stricter so as to suppress regeneration of an arc between the poles of the interrupter, that is, arc-regeneration due to a residual voltage after current interruption. Thus, according to the technology of the related art according to Patent Literature 1, it is difficult for a direct-current circuit breaker to achieve interruption of a fault current and interruption of a load current by a simple configuration.

The present invention has been made in view of the above, and an object thereof is to provide a direct-current circuit breaker capable of achieving interruption of a fault current and interruption of a load current by a simple configuration.

### Solution to Problem

According to the present disclosure, a direct-current circuit breaker as defined in independent claim 1 is provided.

### Advantageous Effects of Invention

According to the present invention, a direct-current circuit breaker produces an effect of enabling interruption of a fault current and interruption of a load current by a simple configuration.

### Brief Description of Drawings

FIG. 1 is a diagram illustrating a configuration of a direct-current circuit breaker according to a first example.
FIG. 2 illustrates graphs for explaining interruption of a direct current by the direct-current circuit breaker according to the first example.
FIG. 3 illustrates graphs for explaining interruption of a direct current by a direct-current circuit breaker according to a comparative example of the first example.
FIG. 4 is a diagram illustrating a configuration of a direct-current circuit breaker according to a second example.
FIG. 5 is a diagram illustrating a configuration of a direct-current circuit breaker according to a third example.
FIG. 6 is a diagram for explaining a direct-current circuit breaker according to a fourth example.
FIG. 7 is a graph for explaining interruption of a direct current by the direct-current circuit breaker according to the fourth example.
FIG. 8 is a diagram illustrating a configuration of a direct-current circuit breaker according to a fifth example.
FIG. 9 is a diagram illustrating a configuration of a direct-current circuit breaker according to the single embodiment.
FIG. 10 illustrates graphs for explaining the characteristics of the direct-current circuit breaker according to the fifth example and the direct-current circuit breaker according to the embodiment for interruption of a residual current.

### Description of Embodiments

### First example.

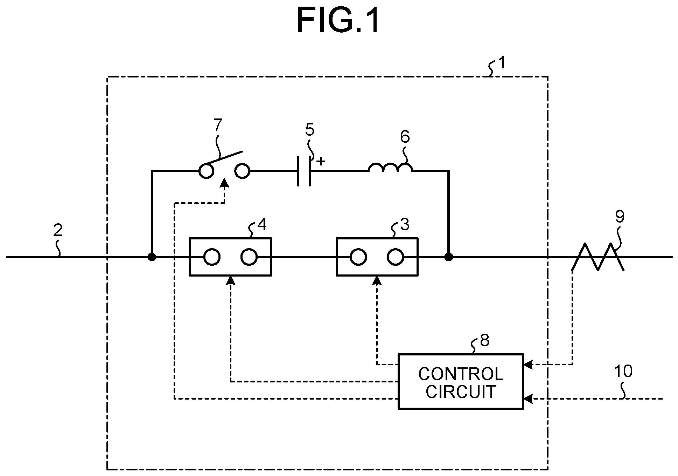

FIG. 1 is a diagram illustrating a configuration of a direct-current circuit breaker according to a first example. A direct-current circuit breaker 1 according to the first example is a mechanical direct-current circuit breaker (DCCB). The direct-current circuit breaker 1 is provided on a direct-current line 2 of a power system. In the first example, the power system is a power system for HVDC power transmission.

The direct-current circuit breaker 1 includes a fault current interrupter 3, which is a first interrupter, and a load current interrupter 4, which is a second interrupter. The fault current interrupter 3 and the load current interrupter 4 are inserted on the direct-current line 2. The fault current interrupter 3 and the load current interrupter 4 are connected in series with each other.

The fault current interrupter 3 performs an opening operation in accordance with a command input to the fault current interrupter 3 upon occurrence of a fault on the direct-current line 2. The fault current interrupter 3 interrupts a direct current at a current zero point at which an oscillating current generated by discharge of a capacitor 5 and the direct current cancel each other out. That is, the fault current interrupter 3 interrupts a direct current by the forced extinction method. The fault current interrupter 3 is a circuit breaker capable of fast interruption of a current, such as a vacuum circuit breaker (VCB), for example.

The load current interrupter 4 performs an opening operation in accordance with a command input to the load current interrupter 4 in a steady state in which a direct current flows to a load connected with the direct-current line 2. The load current interrupter 4 interrupts a direct current at a current zero point at which an oscillating current, which is generated by interaction of an arc of the load current interrupter 4 and the resonant circuit, and the direct current cancel each other out. That is, the load current interrupter 4 interrupts a direct current by a self-excited oscillation method. The load current interrupter 4 is a circuit breaker capable of increasing electric oscillation by interaction of an arc and the resonant circuit to generate an oscillating current, such as a gas circuit breaker (GCB), for example.

The direct-current circuit breaker 1 includes the capacitor 5 and a reactor 6 constituting the resonant circuit, and a high-speed switch 7 included in the resonant circuit. The capacitor 5, the reactor 6, and the high-speed switch 7 are connected in series with each other. The capacitor 5, the reactor 6, and the high-speed switch 7 are connected in parallel with the fault current interrupter 3 and the load current interrupter 4. The capacitance value of the capacitor 5 and the inductance value of the reactor 6 are set so that a fault current of about 10 to 20 kA can be interrupted by the forced extinction method. In addition, the capacitance value of the capacitor 5 and the inductance value of the reactor 6 are set so that a load current of about 1 to 2 kA can be interrupted by the self-excited oscillation method.

The direct-current circuit breaker 1 includes a control circuit 8 that controls the whole direct-current circuit breaker 1. The control circuit 8 outputs commands for an opening operation and commands for a closing operation to each of the fault current interrupter 3, the load current interrupter 4, and the high-speed switch 7. The direct-current line 2 is provided with a current transformer 9 that detects a direct current. The current transformer 9 outputs a result of detection of a direct current to the control circuit 8. An external command 10 for instructing to open or close the direct-current circuit breaker 1 is input to the control circuit 8.

Next, the operation of the direct-current circuit breaker 1 will be described. In a steady state in which a load current flows through the direct-current line 2, the fault current interrupter 3 and the load current interrupter 4 are both closed. The capacitor 5 is charged by a direct-current voltage in the steady state. In the steady state, the high-speed switch 7 is open. As the high-speed switch 7 is open, no current flows in the resonant circuit. The control circuit 8 monitors occurrence of a fault on the direct-current line 2 on the basis of a result of direct current detection by the current transformer 9. The control circuit 8 determines whether or not a fault has occurred by comparing the value of a direct current with a preset threshold. Note that the control circuit 8 may monitor occurrence of a fault on the basis of an amount of change in the direct current or a direct-current voltage.

When a fault such as a ground fault or a short circuit has occurred on the direct-current line 2, a fault current flows through the direct-current line 2. When the value of the direct current flowing through the direct-current line 2 has exceeded the threshold, the control circuit 8 determines that a fault has occurred. When the control circuit 8 has determined that a fault has occurred, the control circuit 8 outputs a command for an opening operation to the fault current interrupter 3. The fault current interrupter 3 performs the opening operation in accordance with the command. After a time point when an inter-electrode distance enabling interruption of a fault current is secured by the fault current interrupter 3, the control circuit 8 outputs a command for a closing operation to the high-speed switch 7. The high-speed switch 7 performs the closing operation in accordance with the command.

As the high-speed switch 7 is closed, the electric charge stored in the capacitor 5 is discharged to the resonant circuit. As a result of the discharge of the capacitor 5, an oscillating current flows through the resonant circuit. The direct-current circuit breaker 1 forcibly creates a current zero point by superimposing an oscillating current with a polarity opposite the polarity of a fault current on the fault current. In this manner, the direct-current circuit breaker 1 interrupts a fault current. Note that the operation upon occurrence of a fault as described above is an example, and may be modified as appropriate. After outputting the command for the closing operation to the high-speed switch 7, the control circuit 8 may output a command for an opening operation to the fault current interrupter 3.

When the external command 10 for an opening operation is input to the control circuit 8 in the steady state, the control circuit 8 outputs a command for a closing operation of the direct-current circuit breaker 1 to the high-speed switch 7. The high-speed switch 7 performs the closing operation in accordance with the command. As the high-speed switch 7 is closed, the capacitor 5 discharges the electric charge. The electric charge discharged from the capacitor 5 flows through the direct-current line 2. Thereafter, the control circuit 8 outputs a command for an opening operation to the load current interrupter 4. The load current interrupter 4 performs the opening operation in accordance with the command. As a result, after most of the electric charge stored in the capacitor 5 is discharged, the load current interrupter 4 is opened.

When the load current interrupter 4 is opened, the load current interrupter 4 generates an oscillating current by interaction of an arc generated by the load current interrupter 4 and the resonant circuit. The direct-current circuit breaker 1 creates a current zero point by superimposing an oscillating current with a polarity opposite the polarity of a load current on the load current. In this manner, the direct-current circuit breaker 1 interrupts a load current. Note that the operation described above performed by the direct-current circuit breaker 1 in accordance with the external command 10 is an example, and may be modified as appropriate. After outputting the command for the opening operation to the load current interrupter 4, the control circuit 8 may output a command for a closing operation to the high-speed switch 7.

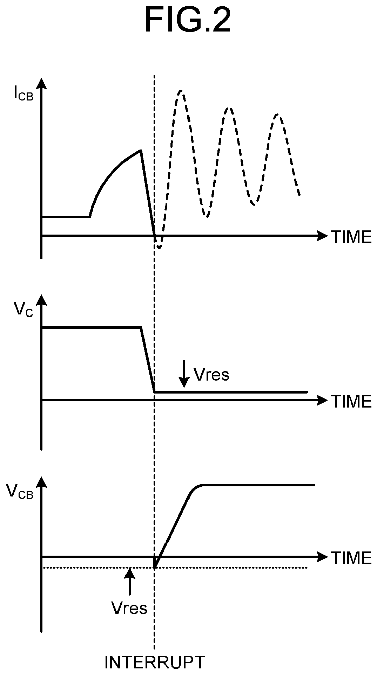

FIG. 2 illustrates graphs for explaining interruption of a direct current by the direct-current circuit breaker according to the first example. A current I_{CB} is a current flowing through the direct-current line 2 in the direct-current circuit breaker 1. A voltage V_{C} is an inter-pole voltage of the capacitor 5. A voltage V_{CB} is a voltage applied to the direct-current circuit breaker 1, which is an inter-pole voltage of the fault current interrupter 3. FIG. 2 illustrates each of a change in the current I_{CB}, a change in the voltage V_{C}, and a change in the voltage V_{CB} when the direct-current circuit breaker 1 interrupts a fault current by the forced extinction method by a graph. In the graph of the current I_{CB}, a current waveform in a case where the fault current interrupter 3 is assumed to be in a closed state is illustrated by a broken curve. Such a current waveform is a current waveform obtained by combining the direct current and the resonant current.

After a command for an opening operation is input to the fault current interrupter 3, the direct-current circuit breaker 1 interrupts the direct current. When a current zero point is created, a residual voltage Vres applied to the capacitor 5 is also applied to between the poles of the fault current interrupter 3. For interrupting a rated breaking current of the direct-current circuit breaker 1, the direct-current circuit breaker 1 is designed so that a current zero point is created immediately after the capacitor 5 completely discharges the electric charge. Thus, the residual voltage Vres at the point when the direct current is interrupted is small. Because the residual voltage Vres is small, the fault current interrupter 3 can suppress arc-regeneration without making the operating duty stricter.

It may be difficult for the fault current interrupter 3 to interrupt a fault current at a timing when the slope of the graph of the current I_{CB} is steep. As illustrated in FIG. 2, a current zero point is created at a timing around a peak of the current I_{CE}. In other words, a current zero point is created at a timing when the slope of the graph is gentle. This can lower the possibility that it is difficult for the fault current interrupter 3 to interrupt a fault current.

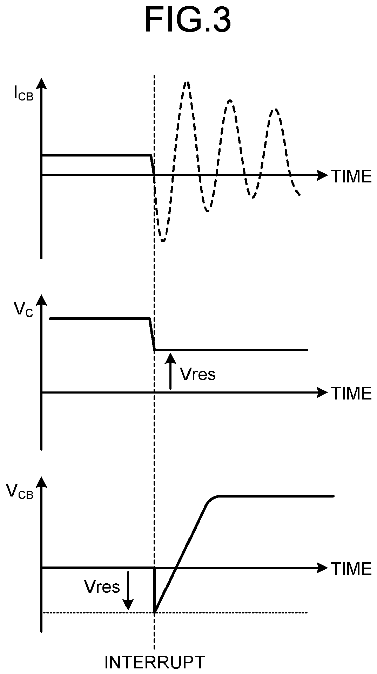

Next, a comparative example in which a load current is interrupted by the forced extinction method will be described. FIG. 3 illustrates graphs for explaining interruption of a direct current by a direct-current circuit breaker according to the comparative example of the first example. FIG. 3 illustrates examples of changes in the current I_{CB}, the voltage V_{C}, and the voltage V_{CB} when the direct-current circuit breaker according to the comparative example interrupts a load current by the forced extinction method by graphs. In the graph of the current I_{CB}, a current waveform in a case where the direct-current circuit breaker according to the comparative example is assumed to be in a closed state is illustrated by a broken curve. Such a current waveform is a current waveform obtained by combining the direct current and the resonant current. The direct-current circuit breaker according to the comparative example interrupts a fault current by opening the interrupter. The direct-current circuit breaker according to the comparative example is assumed to be designed to be capable of interrupting a fault current of about 10 to 20 kA.

Because a load current is smaller than a fault current, much electric charge remains in the capacitor 5 at a current zero point when the direct-current circuit breaker according to the comparative example interrupts a load current. The residual voltage Vres of the capacitor 5 when the load current is interrupted is also applied to between the poles of the interrupter. Thus, in the comparative example, the interrupter needs to make the operating duty stricter so as to suppress arc-regeneration.

As illustrated in FIG. 3, a current zero point is created at a timing away from a peak of the current I_{CB}. In other words, a current zero point is created at a timing when the slope of the graph is steep. Thus, it may be difficult for the direct-current circuit breaker according to the comparative example to interrupt a load current.

In contrast, the direct-current circuit breaker 1 according to the first example interrupts a load current by the self-excited oscillation method. Because most of the electric charge stored in the capacitor 5 is discharged for interruption of a load current, the direct-current circuit breaker 1 can make the residual voltage Vres at interruption of the direct current small. Because the residual voltage Vres is small, the direct-current circuit breaker 1 can suppress arc-regeneration at the load current interrupter 4 without making the operating duty of the load current interrupter 4 stricter.

Interruption by the self-excited oscillation method creates a current zero point by gradually increasing the oscillation of an oscillating current. Thus, a current zero point is always created at a timing around a peak of the current I_{CB}. This can lower the possibility that it is difficult for the load current interrupter 4 to interrupt a load current.

In the direct-current circuit breaker 1 according to the first example, the capacitor 5, the reactor 6, and the high-speed switch 7 are used in common for interruption of a fault current by the fault current interrupter 3 and interruption of a load current by the load current interrupter 4. That is, the resonant circuit provided in the direct-current circuit breaker 1 is used for both of interrupting a fault current and interrupting a load current. The direct-current circuit breaker 1 can have a simpler configuration as compared with a case where a resonant circuit for interrupting a load current is provided in addition to a resonant circuit for interrupting a fault current.

Furthermore, according to the first example, interruption of a fault current and interruption of a load current are performed by one direct-current circuit breaker 1. According to the first example, interruption of a fault current and interruption of a load current can be performed by a simpler configuration as compared with a case where a direct-current circuit breaker for interrupting a load current is provided in addition to a direct-current circuit breaker for interrupting a fault current. As described above, the direct-current circuit breaker 1 produces an effect of enabling interruption of a fault current and interruption of a load current by a simple configuration.

### Second example.

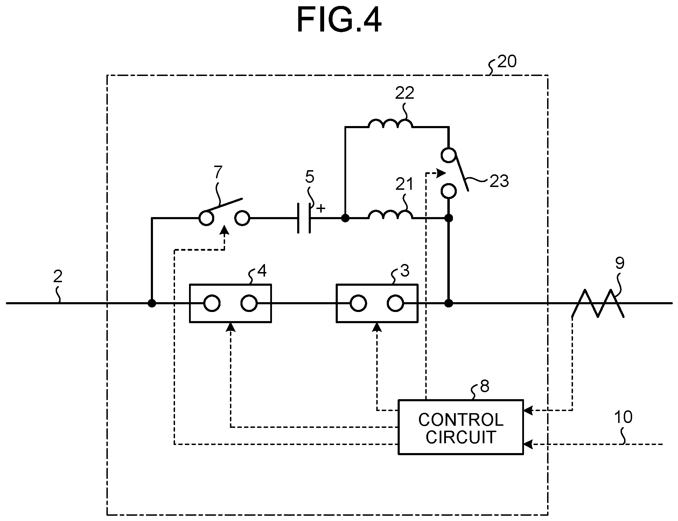

FIG. 4 is a diagram illustrating a configuration of a direct-current circuit breaker according to a second example. A direct-current circuit breaker 20 according to the second example includes a switch 23 for switching of reactors connected with the fault current interrupter 3 and the load current interrupter 4. In the second example, components that are the same as those in the first example described above will be represented by the same reference numerals, and features different from those in the first example will be mainly described.

The direct-current circuit breaker 20 includes two reactors 21 and 22. The capacitance value of the capacitor 5 and the inductance value of the reactor 21 are set so that a fault current of about 10 to 20 kA can be interrupted by the forced extinction method. In addition, the capacitance value of the capacitor 5 and the inductance values of the reactors 21 and 22 are set so that a load current of about 1 to 2 kA can be interrupted by the self-excited oscillation method. The switch 23 is connected in series with the reactor 22. The reactor 22 and the switch 23 are connected in parallel with the reactor 21. The control circuit 8 outputs commands for an opening operation and commands for a closing operation to the switch 23.

Next, the operation of the direct-current circuit breaker 20 will be described. In a steady state in which a load current flows through the direct-current line 2, the switch 23 is open. In the steady state, because the high-speed switch 7 is open, no current flows in the resonant circuit. When the control circuit 8 has determined that a fault has occurred on the direct-current line 2, the control circuit 8 outputs a command for an opening operation to the fault current interrupter 3, and outputs a command for a closing operation to the high-speed switch 7, in a manner similar to the first example. The switch 23 maintains the open state. In this manner, for interrupting a fault current, the direct-current circuit breaker 20 connects the reactor 21, which is one of the two reactors 21 and 22, with the fault current interrupter 3. The direct-current circuit breaker 20 interrupts a fault current by generating an oscillating current by the resonant circuit including the reactor 21.

When the external command 10 for an opening operation of the direct-current circuit breaker 20 is input to the control circuit 8, the control circuit 8 outputs a command for a closing operation to the switch 23. The switch 23 performs the closing operation in accordance with the command. Thereafter, in a manner similar to the first example, the control circuit 8 outputs a command for a closing operation to the high-speed switch 7, and outputs a command for an opening operation to the load current interrupter 4. In this manner, for interrupting a load current, the direct-current circuit breaker 20 connects the two reactors 21 and 22 with the load current interrupter 4. The direct-current circuit breaker 20 interrupts a load current by generating an oscillating current by the resonant circuit including the reactors 21 and 22.

According to the second example, the direct-current circuit breaker 20 can use, for interruption of a fault current, the capacitor 5 and the reactor 21 with the capacitance value and the inductance value optimized for interruption of a fault current. In addition, the direct-current circuit breaker 20 can use, for interruption of a load current, the capacitor 5 and the reactors 21 and 22 with the capacitance value and the inductance value optimized for interruption of a load current. Thus, the direct-current circuit breaker 20 can reliably interrupt a fault current and reliably interrupt a load current.

Note that the configuration described above for enabling optimization for interrupting a fault current and optimization for interrupting a load current is an example, and may be modified as appropriate. The direct-current circuit breaker 20 may switch the capacitor connected with the fault current interrupter 3 and the load current interrupter 4 by the switch 23. The direct-current circuit breaker 20 may switch the capacitor and the reactor connected with the fault current interrupter 3 and the load current interrupter 4 by the switch 23. In the direct-current circuit breaker 20, at least one of the capacitor connected with the fault current interrupter 3 and the load current interrupter 4 and the reactor connected with the fault current interrupter 3 and the load current interrupter 4 may be capable of being switched. Thus, the direct-current circuit breaker 20 can reliably interrupt a fault current and reliably interrupt a load current.

### Third example.

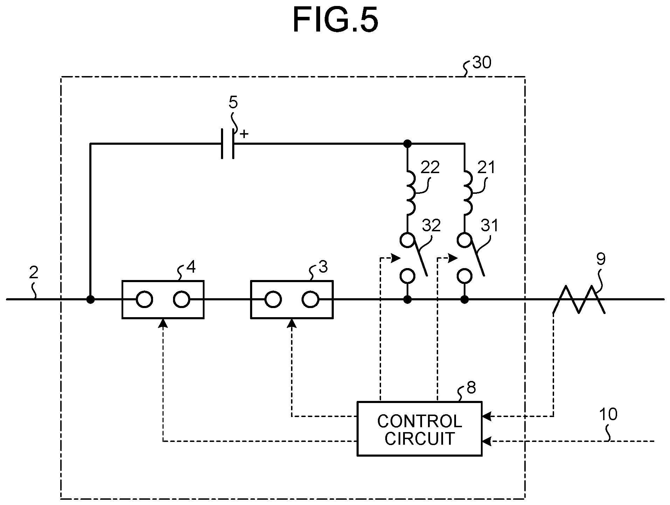

FIG. 5 is a diagram illustrating a configuration of a direct-current circuit breaker according to a third example. direct-current circuit breaker 30 according to the third example includes two high-speed switches 31 and 32. In the third example, components that are the same as those in the first or second example described above will be represented by the same reference numerals, and features different from those in the first or second example will be mainly described.

The direct-current circuit breaker 30 includes two reactors 21 and 22. The capacitance value of the capacitor 5 and the inductance value of the reactor 21 are set so that a fault current of about 10 to 20 kA can be interrupted by the forced extinction method. In addition, the capacitance value of the capacitor 5 and the inductance value of the reactor 22 are set so that a load current of about 1 to 2 kA can be interrupted by the self-excited oscillation method. The high-speed switch 31 is a switch for switching: connection of the capacitor 5 and reactor 21 with the fault current interrupter 3 and the load current interrupter 4; and disconnection of the capacitor 5 and the reactor 21 with the fault current interrupter 3 and the load current interrupter 4. The high-speed switch 32 is a switch for switching: connection of the capacitor 5 and reactor 22 with the fault current interrupter 3 and the load current interrupter 4; and disconnection of the capacitor 5 and the reactor 22 with the fault current interrupter 3 and the load current interrupter 4.

In a state in which the high-speed switch 31 is closed and the high-speed switch 32 is open, the reactor 21, which is one of the two reactors 21 and 22, is connected with the fault current interrupter 3 and the load current interrupter 4. In addition, in a state in which the high-speed switch 31 is open and the high-speed switch 32 is closed, the reactor 22, which is the other of the two reactors 21 and 22, is connected with the fault current interrupter 3 and the load current interrupter 4. As described above, the high-speed switches 31 and 32 switch the reactor connected with the fault current interrupter 3 and the load current interrupter 4. The high-speed switches 31 and 32 have both of the functions of the high-speed switch 7 in the first example and the functions of the switch 23 in the second example.

The high-speed switch 31 is connected in series with the reactor 21. The high-speed switch 32 is connected in series with the reactor 22. The reactor 21 and the high-speed switch 31 are connected in parallel with the reactor 22 and the high-speed switch 32. The control circuit 8 outputs commands for an opening operation and commands for a closing operation to the high-speed switches 31 and 32.

Next, the operation of the direct-current circuit breaker 30 will be described. In a steady state in which a load current flows through the direct-current line 2, the high-speed switches 31 and 32 are both open. When the control circuit 8 has determined that a fault has occurred on the direct-current line 2, the control circuit 8 outputs a command for an opening operation to the fault current interrupter 3. After a time point when an inter-electrode distance enabling interruption of a fault current is secured by the fault current interrupter 3, the control circuit 8 outputs a command for a closing operation to the high-speed switch 31. The high-speed switch 31 performs the closing operation in accordance with the command. Note that, after outputting the command for the closing operation to the high-speed switch 31, the control circuit 8 may output a command for an opening operation to the fault current interrupter 3.

When the external command 10 for an opening operation of the direct-current circuit breaker 30 is input to the control circuit 8, the control circuit 8 outputs a command for a closing operation to the high-speed switch 32. The high-speed switch 32 performs the closing operation in accordance with the command. After the electric charge discharged from the capacitor 5 has flowed to the direct-current line 2 as the high-speed switch 32 is closed, the control circuit 8 outputs a command for an opening operation to the load current interrupter 4. Note that, after outputting the command for the opening operation to the load current interrupter 4, the control circuit 8 may output a command for a closing operation to the high-speed switch 32.

According to the third example, the direct-current circuit breaker 30 can use, for interruption of a fault current, the capacitor 5 and the reactor 21 with the capacitance value and the inductance value optimized for interruption of a fault current. In addition, the direct-current circuit breaker 30 can use, for interruption of a load current, the capacitor 5 and the reactor 22 with the capacitance value and the inductance value optimized for interruption of a load current. Thus, the direct-current circuit breaker 30 can reliably interrupt a fault current and reliably interrupt a load current.

The direct-current circuit breaker 30 performs connection of the capacitor 5 and the reactors 21 and 22 with the fault current interrupter 3 and the load current interrupter 4 and switching of the reactors 21 and 22 at the same time by controlling the high-speed switch 31 or by controlling the high-speed switch 32. As a result, the direct-current circuit breaker 30 can interrupt a fault current and interrupt a load current by simpler control as compared with a case where the reactors 21 and 22 are switched in addition to the connection of the capacitor 5 and the reactors 21 and 22.

Note that the configuration described above for enabling optimization for interrupting a fault current and optimization for interrupting a load current is an example, and may be modified as appropriate. The direct-current circuit breaker 30 may switch the capacitor connected with the fault current interrupter 3 and the load current interrupter 4 by the high-speed switches 31 and 32. The direct-current circuit breaker 30 may switch the capacitor and the reactor connected with the fault current interrupter 3 and the load current interrupter 4 by the high-speed switches 31 and 32. In the direct-current circuit breaker 30, at least one of the capacitor connected with the fault current interrupter 3 and the load current interrupter 4 and the reactor connected with the fault current interrupter 3 and the load current interrupter 4 may be capable of being switched. Thus, the direct-current circuit breaker 30 can reliably interrupt a fault current and reliably interrupt a load current.

### Fourth example.

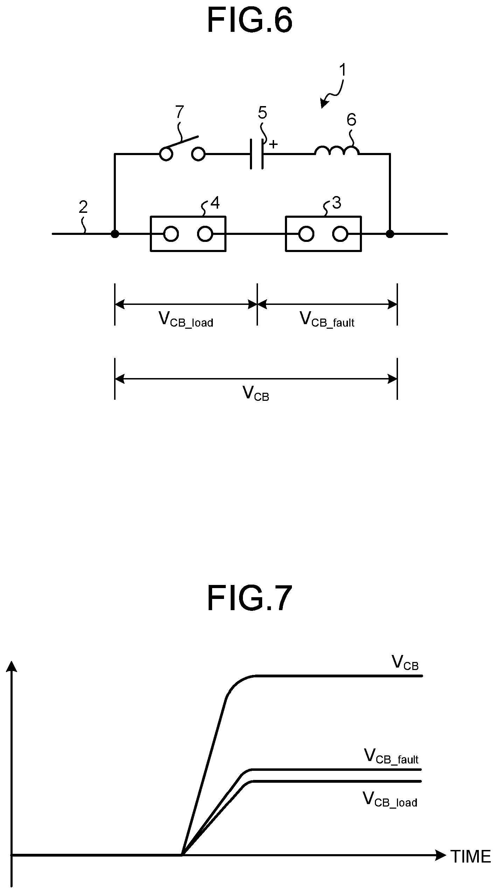

In a fourth example, a case where the direct-current circuit breaker 1 according to the first example opens the load current interrupter 4 and the fault current interrupter 3 when interrupting a load current. FIG. 6 is a diagram for explaining a direct-current circuit breaker according to the fourth example. FIG. 6 illustrates the fault current interrupter 3, the load current interrupter 4, the capacitor 5, the reactor 6, and the high-speed switch 7 in the direct-current circuit breaker 1. In the fourth example, components that are the same as those in the first to third examples described above will be represented by the same reference numerals, and features different from those in the first to third examples will be mainly described.

In a manner similar to the first example, when the external command 10 for an opening operation of the direct-current circuit breaker 1 is input to the control circuit 8 in the steady state, the control circuit 8 outputs a command for a closing operation to the high-speed switch 7. After the capacitor 5 has discharged the electric charge as the high-speed switch 7 is closed, the control circuit 8 outputs a command for an opening operation to the load current interrupter 4, and outputs a command for an opening operation to the fault current interrupter 3. As a result, when the load current interrupter 4 performs the opening operation in accordance with the command input to the load current interrupter 4, the fault current interrupter 3 performs the opening operation. Note that, when a fault has occurred on the direct-current line 2, the direct-current circuit breaker 1 according to the fourth example interrupts a fault current in a manner similar to the first example.

FIG. 7 is a graph for explaining interruption of a direct current by the direct-current circuit breaker according to the fourth example. FIG. 7 illustrates a change in voltage V_{CB} applied to the direct-current circuit breaker 1, a change in voltage V_{CB_fault} applied to the fault current interrupter 3, and a change in voltage V_{CB_load} applied to the load current interrupter 4 in the graph.

When the fault current interrupter 3 and the load current interrupter 4 are opened for interrupting a load current, the voltage V_{CB} applied to the direct-current circuit breaker 1 is divided into the voltage V_{CB_fault} applied to the fault current interrupter 3 and the voltage V_{CB_load} applied to the load current interrupter 4. Because the application of the voltage V_{CB} is divided to the fault current interrupter 3 and the load current interrupter 4, the voltage applied to the load current interrupter 4 can be made lower as compared to the case where the voltage V_{CB} is applied only to the load current interrupter 4. As a result, the direct-current circuit breaker 1 can use a load current interrupter 4 having a low withstand voltage performance. Note that, for interrupting a load current, the direct-current circuit breakers 20 and 30 according to the second or third example may open the load current interrupter 4 and the fault current interrupter 3 in a manner similar to the fourth example.

### Fifth example.

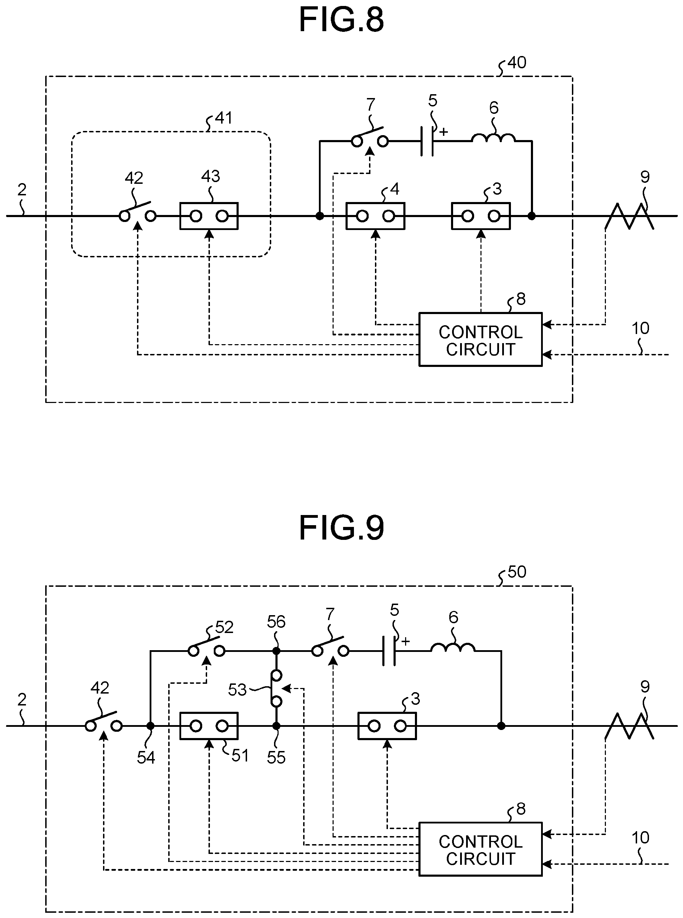

FIG. 8 is a diagram illustrating a configuration of a direct-current circuit breaker according to a fifth example. A direct-current circuit breaker 40 according to the fifth example interrupts a residual current flowing after a direct current is interrupted by the fault current interrupter 3 or the load current interrupter 4. In the fifth example, components that are the same as those in the first to fourth examples described above will be represented by the same reference numerals, and features different from those in the first to fourth examples will be mainly described.

The direct-current circuit breaker 40 includes a residual current interrupter 41. The residual current interrupter 41 includes a disconnector 42 and a circuit breaker 43. The disconnector 42 and the circuit breaker 43 are inserted on the direct-current line 2. The fault current interrupter 3, the load current interrupter 4, the disconnector 42, and the circuit breaker 43 are connected in series with each other. The fault current interrupter 3, the load current interrupter 4, the high-speed switch 7, the capacitor 5, and the reactor 6 constitute a loop. The disconnector 42 and the circuit breaker 43 are connected outside the loop. The control circuit 8 outputs commands for an opening operation and commands for a closing operation to each of the disconnector 42 and the circuit breaker 43.

Next, the operation of the direct-current circuit breaker 40 will be described. In a steady state in which a load current flows through the direct-current line 2, the disconnector 42 and the circuit breaker 43 are both closed. After interrupting a fault current by the fault current interrupter 3, the direct-current circuit breaker 40 opens the circuit breaker 43 and the disconnector 42. After interrupting a load current by the load current interrupter 4, the direct-current circuit breaker 40 opens the disconnector 42. In this manner, the direct-current circuit breaker 40 can interrupt a residual current flowing after interruption of a fault current and a residual current flowing after interruption of a load current.

Next, an embodiment will be described. FIG. 9 is a diagram illustrating a configuration of a direct-current circuit breaker according to the embodiment. A direct-current circuit breaker 50 according to the embodiment interrupts, by the disconnector 42 and a load current interrupter 51, a residual current flowing after interruption of a direct current by the fault current interrupter 3. In addition, the direct-current circuit breaker 50 interrupts, by the disconnector 42, a residual current flowing after interruption of a direct current by the load current interrupter 51.

The load current interrupter 51 and the disconnector 42 are inserted on the direct-current line 2. The fault current interrupter 3, the load current interrupter 51, and the disconnector 42 are connected in series with each other. The direct-current circuit breaker 50 includes two switches 52 and 53. The switch 52, the high-speed switch 7, the capacitor 5, and the reactor 6 are connected in series with each other. The switch 52, the high-speed switch 7, the capacitor 5, and the reactor 6 are connected in parallel with the fault current interrupter 3 and the load current interrupter 51.

One contact of the switch 52 is connected with a connection point 54 between the disconnector 42 and the load current interrupter 51. The other contact of the switch 52 is connected with the high-speed switch 7. One contact of the switch 53 is connected with a connection point 55 between the fault current interrupter 3 and the load current interrupter 51. The other contact of the switch 53 is connected with a connection point 56 between the high-speed switch 7 and the switch 52. The control circuit 8 outputs commands for an opening operation and commands for a closing operation to each of the switch 52 and the switch 53.

Next, the operation of the direct-current circuit breaker 50 will be described. In a steady state in which a load current flows through the direct-current line 2, the fault current interrupter 3, the load current interrupter 51, the disconnector 42, and the switch 53 are all closed. In the steady state, the high-speed switch 7 and the switch 52 are both open. In this state, the fault current interrupter 3, the high-speed switch 7, the capacitor 5, and the reactor 6 constitute a loop. The load current interrupter 51 and the disconnector 42 are out of the loop. Such a state of connection of the components included in the direct-current circuit breaker 50 will be referred to as a first state.

Upon determining that a fault has occurred on the direct-current line 2, the direct-current circuit breaker 50 opens the fault current interrupter 3 and closes the high-speed switch 7 in a manner similar to the first example. After interrupting a fault current by the fault current interrupter 3, the direct-current circuit breaker 50 opens the load current interrupter 51 and the disconnector 42. In this manner, the direct-current circuit breaker 50 interrupts a residual current flowing after interruption of the fault current. When interrupting a fault current, the load current interrupter 51 has a function similar to that of the circuit breaker 43.

When the external command 10 for an opening operation of the direct-current circuit breaker 50 is input to the control circuit 8, the control circuit 8 outputs a command for a closing operation to the switch 52 and a command for an opening operation to the switch 53. In this state, the fault current interrupter 3, the load current interrupter 51, the high-speed switch 7, the capacitor 5, and the reactor 6 constitute a loop. The disconnector 42 is out of the loop. Such a state of connection of the components included in the direct-current circuit breaker 50 will be referred to as a second state. In the direct-current circuit breaker 50, the connection of the fault current interrupter 3, the load current interrupter 51, the high-speed switch 7, the capacitor 5, and the reactor 6 is switched between the first state and the second state by opening and closing of the switch 52 and opening and closing of the switch 53.

Thereafter, in a manner similar to the first example, the control circuit 8 outputs a command for a closing operation to the high-speed switch 7, and outputs a command for an opening operation to the load current interrupter 51. After interrupting a load current by the load current interrupter 51, the direct-current circuit breaker 50 opens the disconnector 42. In this manner, the direct-current circuit breaker 50 interrupts a residual current flowing after interruption of the load current. The direct-current circuit breaker 50 interrupts, by the disconnector 42, a residual current flowing after interruption of the load current.

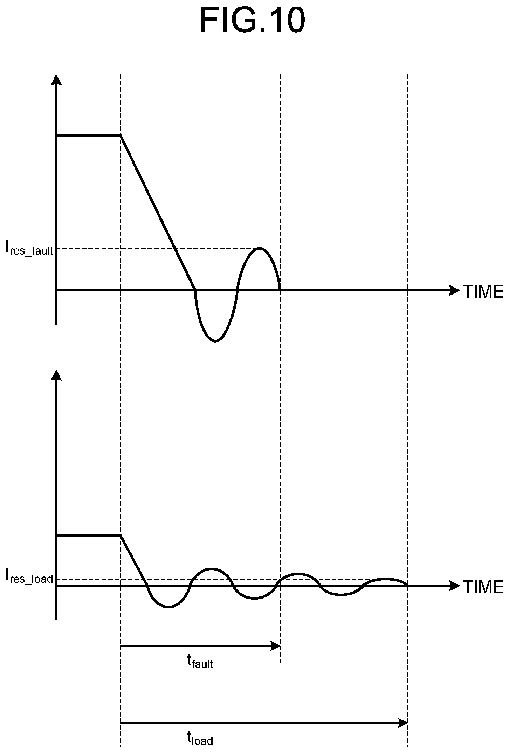

Next, the characteristics of the above-described direct-current circuit breaker 40 according to the fifth example and the direct-current circuit breaker 50 according to the embodiment for interruption of a residual current will be explained. FIG. 10 illustrates graphs for explaining the characteristics of the direct-current circuit breaker according to the fifth example and the direct-current circuit breaker according to the embodiment for interruption of a residual current.

A current I_{res_fault} is a residual current flowing after interruption of a fault current. A current I_{res_load} is a residual current flowing after interruption of a load current. FIG. 10 illustrates each of a change in the current I_{res_fault} flowing through the direct-current circuit breakers 40 and 50 and a change in the current I_{res_load} flowing through the direct-current circuit breakers 40 and 50 in a graph.

After the direct-current line 2 is opened by interruption of a fault current, the direct-current line 2 is closed in a short time. In other words, a high-speed re-closure is performed. When a fault has occurred on the direct-current line 2, the high-speed re-closure is necessary for returning a power system to a normal state as soon as possible after the occurrence of the fault. The direct-current circuit breakers 40 and 50 are required to perform the operation for interrupting a fault current at a high-speed to enable high-speed re-closure. In contrast, in the case of interruption of a load current, the high-speed re-closure is not necessary. The direct-current circuit breakers 40 and 50 need not increase the speed the operation for interrupting a load current unlike the case of interruption of a fault current.

A time t_{fault} is a time from the start of the operation for interrupting the fault current until the residual current is interrupted. A time t_{load} is a time from the start of the operation for interrupting the load current until the residual current is interrupted. The time t_{load} is longer than the time t_{fault}. A crest value of the current I_{res_fault} is larger than that of the current I_{res_load}. Energy remaining in an inductance of a power system immediately after a direct current is interrupted is larger in the case of interrupting a fault current than the case of interrupting a load current. Thus, when it is assumed that interruption of a residual current is not performed, the duration of the current I_{resfault} is longer than the duration of current I_{res_load}. In addition, the crest value of the current I_{resfault} is larger than that of the current I_{res_load}.

The circuit breaker 43 illustrated in FIG. 8 has characteristics capable of interrupting the current I_{resfault} in the time t_{fault}. The disconnector 42 has characteristics capable of interrupting the current I_{res_load} in the time t_{load}. Thus, the circuit breaker 43 has characteristics capable of performing the operation for interruption at higher speed than the disconnector 42 and interrupting a current higher than a current that can be interrupted by the disconnector 42. The direct-current circuit breaker 40 includes the residual current interrupter 41 including the disconnector 42 and the circuit breaker 43, which enables interruption of a residual current flowing after a fault current is interrupted and interruption of a residual current flowing after a load current is interrupted. Note that residual current interrupter 41 may be applied to the direct-current circuit breakers 1, 20, and 30 according to the first to fourth examples.

The load current interrupter 51 illustrated in FIG. 9 has characteristics capable of interrupting the current I_{resfault} in the time t_{fault}. That is, the load current interrupter 51 has characteristics capable of performing the operation for interruption at higher speed than the disconnector 42 and interrupting a current higher than a current that can be interrupted by the disconnector 42. The direct-current circuit breaker 50 can interrupt a residual current flowing after a fault current is interrupted by applying the load current interrupter 51 for interrupting a load current to interruption of a residual current flowing after a fault current is interrupted. In addition, the direct-current circuit breaker 50 can interrupt a residual current flowing after a load current is interrupted, by including the disconnector 42.

In the direct-current circuit breaker 50, because the load current interrupter 51 for interrupting a load current is also applied to interruption of a residual current flowing after a fault current is interrupted, an additional circuit breaker only for an opening operation for interruption of a residual current is not needed. As a result, the direct-current circuit breaker 50 can reduce the number of circuit breakers as compared with a case where a circuit breaker only for an opening operation for interruption of a residual current is needed. As described above, according to the modification of the fifth example, the direct-current circuit breaker 50 can interrupt a residual current flowing after a fault current is interrupted and a residual current flowing after a load current is interrupted by a simple configuration. Note that the load current interrupter 51 and the disconnector 42 similar to those of the embodiment may be applied to the direct-current circuit breakers 1, 20, and 30 according to the first to fourth examples.

### Reference Signs List

1, 20, 30, 40, 50 direct-current circuit breaker; 2 direct-current line; 3 fault current interrupter; 4, 51 load current interrupter; 5 capacitor; 6, 21, 22 reactor; 7, 31, 32 high-speed switch; 8 control circuit; 9 current transformer; 10 external command; 23, 52, 53 switch; 41 residual current interrupter; 42 disconnector; 43 circuit breaker; 54, 55, 56 connection point.

## Claims

1. A direct-current circuit breaker (50) for interrupting a direct current flowing through a direct-current line (2), the direct-current circuit breaker (50) comprising:
a first interrupter (3), a second interrupter (51), and a disconnector (42) connected in series with each other on the direct-current line (2);
a capacitor (5) and a reactor (6, 21, 22), constituting a resonant circuit, connected in parallel with the first interrupter (3) and the second interrupter (51), the capacitor (5) and a reactor (6, 21, 22) being connected in series;
a high-speed switch (7) provided in the resonant circuit;
a first switch (52) connected between a first connection point (54) and the high-speed switch (7), wherein the first connection point (54) is disposed between the second interrupter (51) and the disconnector (42);
a second switch (53) connected between a second connection point (55) and a third connection point (56), wherein the second connection point (55) is disposed between the first interrupter (3) and the second interrupter (51), and the third connection point (56) is disposed between the high-speed switch (7) and the first switch (52); and
a control circuit (8), wherein
the control circuit (8) is configured such that:
in a steady state in which a load current flows through the direct-current line (2), the first interrupter (3), the second interrupter (51), the disconnector (42) and the second switch (53) are closed and the high-speed switch (7) and the first switch (52) are open,
upon occurrence of a fault on the direct-current line (2), a fault current is interrupted by opening the first interrupter (3) and closing the high-speed switch (7), and a residual current flowing after interruption of the fault current is interrupted by opening the second interrupter (51) and the disconnector (42), and
when the load current is being interrupted, the load current is interrupted by closing the first switch (52) and opening the second switch (53) and then opening the second interrupter (51) and closing the high-speed switch (7), and a residual current flowing after interruption of the load current is then interrupted by opening the disconnector (42).

## Patentansprüche

1. Gleichstrom-Leistungsschalter (50) zum Unterbrechen eines durch eine Gleichstromleitung (2) fließenden Gleichstroms, wobei der Gleichstrom-Leistungsschalter (50) aufweist:
einen ersten Unterbrecher (3), einen zweiten Unterbrecher (51) und eine Trenneinrichtung (42), die auf der Gleichstromleitung (2) miteinander in Reihe verbunden sind;
einen Kondensator (5) und eine Drossel (6, 21, 22), die einen Resonanzkreis bilden, der parallel mit dem ersten Unterbrecher (3) und mit dem zweiten Unterbrecher (51) verbunden ist, wobei der Kondensator (5) und eine Drossel (6, 21, 22) in Reihe verbunden sind;
einen Hochgeschwindigkeitsschalter (7), der in dem Resonanzkreis vorgesehen ist;
einen ersten Schalter (52), der zwischen einem ersten Verbindungspunkt (54) und dem Hochgeschwindigkeitsschalter (7) verbunden ist, wobei der erste Verbindungspunkt (54) zwischen dem zweiten Unterbrecher (51) und der Trenneinrichtung (42) angeordnet ist;
einen zweiten Schalter (53), der zwischen einem zweiten Verbindungspunkt (55) und einem dritten Verbindungspunkt (56) verbunden ist, wobei der zweite Verbindungspunkt (55) zwischen dem ersten Unterbrecher (3) und dem zweiten Unterbrecher (51) angeordnet ist und wobei der dritte Verbindungspunkt (56) zwischen dem Hochgeschwindigkeitsschalter (7) und dem ersten Schalter (52) angeordnet ist; und
eine Steuerschaltung (8), wobei
die Steuerschaltung (8) derart eingerichtet ist, dass:
in einem stationären Zustand, in dem ein Laststrom durch die Gleichstromleitung (2) fließt, der erste Unterbrecher (3), der zweite Unterbrecher (51), die Trenneinrichtung (42) und der zweite Schalter (53) geschlossen sind und der Hochgeschwindigkeitsschalter (7) und der erste Schalter (52) geöffnet sind,
bei einem Auftreten eines Fehlers auf der Gleichstromleitung (2) ein Fehlerstrom durch ein Öffnen des ersten Unterbrechers (3) und ein Schließen des Hochgeschwindigkeitsschalters (7) unterbrochen wird, und ein nach einer Unterbrechung des Fehlerstroms fließender Reststrom durch ein Öffnen des zweiten Unterbrechers (51) und der Trenneinrichtung (42) unterbrochen wird, und
wenn der Laststrom unterbrochen wird, der Laststrom durch ein Schließen des ersten Schalters (52) und ein Öffnen des zweiten Schalters (53) und ein anschließendes Öffnen des zweiten Unterbrechers (51) und ein Schließen des Hochgeschwindigkeitsschalters (7) unterbrochen wird, und ein nach einer Unterbrechung des Laststroms fließender Reststrom dann durch ein Öffnen der Trenneinrichtung (42) unterbrochen wird.

## Revendications

1. Disjoncteur à courant continu (50) destiné à interrompre un courant continu circulant à travers une ligne à courant continu (2), le disjoncteur à courant continu (50) comprenant :
un premier interrupteur (3), un second interrupteur (51) et un sectionneur (42) connectés en série les uns avec les autres sur la ligne à courant continu (2) ;
un condensateur (5) et un réacteur (6, 21, 22), constituant un circuit oscillant, connectés en parallèle avec le premier interrupteur (3) et le second interrupteur (51), le condensateur (5) et un réacteur (6, 21, 22) étant connectés en série ;
un commutateur à grande vitesse (7) pourvu dans le circuit oscillant ;
un premier commutateur (52) connecté entre un premier point de connexion (54) et le commutateur à grande vitesse (7), dans lequel le premier point de connexion (54) est disposé entre le second interrupteur (51) et le sectionneur (42) ;
un second commutateur (53) connecté entre un deuxième point de connexion (55) et un troisième point de connexion (56), dans lequel le deuxième point de connexion (55) est disposé entre le premier interrupteur (3) et le second interrupteur (51), et le troisième point de connexion (56) est disposé entre le commutateur à grande vitesse (7) et le premier commutateur (52) ; et
un circuit de commande (8), dans lequel
le circuit de commande (8) est configuré de telle sorte que :
dans un état permanent dans lequel un courant de charge circule à travers la ligne à courant continu (2), le premier interrupteur (3), le second interrupteur (51), le sectionneur (42) et le second commutateur (53) sont fermés et le commutateur à grande vitesse (7) et le premier commutateur (52) sont ouverts,
en cas de défaut sur la ligne à courant continu (2), un courant de défaut est interrompu par l'ouverture du premier interrupteur (3) et la fermeture du commutateur à grande vitesse (7), et un courant résiduel circulant après l'interruption du courant de défaut est interrompu par l'ouverture du second interrupteur (51) et du sectionneur (42), et
lorsque le courant de charge est interrompu, le courant de charge est interrompu en fermant le premier commutateur (52) et en ouvrant le second commutateur (53) puis en ouvrant le second interrupteur (51) et en fermant le commutateur à grande vitesse (7), et un courant résiduel circulant après l'interruption du courant de charge est ensuite interrompu par l'ouverture du sectionneur (42).
